(19) Europäisches Patentamt / European Patent Office / Office européen des brevets

(11) **EP 3 754 197 B1**

(12) **EUROPEAN PATENT SPECIFICATION**

(45) Date of publication and mention
of the grant of the patent:
**25.12.2024  Bulletin 2024/52**

(21) Application number: **19757682.0**

(22) Date of filing: **07.01.2019**

(51) International Patent Classification (IPC):
**F04C 18/02** *(2006.01)*        **F04C 29/00** *(2006.01)*

(52) Cooperative Patent Classification (CPC):
**F04C 18/0276; F04C 18/02; F04C 18/0215;
F04C 18/0253; F04C 29/00**

(86) International application number:
**PCT/JP2019/000072**

(87) International publication number:
**WO 2019/163308 (29.08.2019 Gazette 2019/35)**

(54) **SCROLL FLUID MACHINE AND MACHINING METHOD OF SCROLL MEMBER**

SPIRALFLUIDMASCHINE UND BEARBEITUNGSVERFAHREN FÜR EIN SPIRALELEMENT

MACHINE À FLUIDE À SPIRALE ET PROCÉDÉ D'USINAGE D'ÉLÉMENT À SPIRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2018   JP 2018028962**

(43) Date of publication of application:
**23.12.2020   Bulletin 2020/52**

(73) Proprietor: **MITSUBISHI HEAVY INDUSTRIES
THERMAL SYSTEMS, LTD.
108-8215 Tokyo (JP)**

(72) Inventors:
• **SATO, Hajime**
  **Tokyo 108-8215 (JP)**
• **KIMATA, Yoshiyuki**
  **Tokyo 108-8215 (JP)**
• **HAMANO, Masashi**
  **Tokyo 108-8215 (JP)**
• **ITO, Takahide**
  **Tokyo 100-8332 (JP)**

(74) Representative: **Cabinet Beau de Loménie
158, rue de l'Université
75340 Paris Cedex 07 (FR)**

(56) References cited:
**EP-A1- 3 428 451          WO-A1-2018/012268
CN-U- 204 003 446       CN-U- 204 003 446
JP-A- 2002 070 766      JP-A- 2004 316 580
JP-A- 2004 316 580      JP-A- H06 137 286
JP-A- H09 158 854        JP-A- H10 141 255**

## Description

[Technical Field]

The present invention relates to a scroll fluid machine and a machining method for a scroll member.

[Background Art]

Generally, there is known a scroll fluid machine in which a fixed scroll member and an orbiting scroll member provided with respective spiral walls on respective end plates are engaged and revolved to compress or expand fluid.

As such a scroll fluid machine, a so-called stepped scroll compressor disclosed in PTL 1 is known. In this stepped scroll compressor, respective step sections are provided at positions along the spiral directions of tooth tip surfaces and tooth bottom surfaces of spiral walls of a fixed scroll and an orbiting scroll, and the height of the outer circumferential side of the wall is made higher than the height of the inner circumferential side of the wall with each step section as a boundary. The stepped scroll compressor performs compression not only in the circumferential direction of the walls, but also in the height direction (three-dimensional compression), and therefore it is possible to increase displacement and increase compressor capacity compared to a general scroll compressor with no step section (two-dimensional compression). PTL 2 discloses a scroll fluid machine including chamfered portions of tooth tip corners of a tooth tip of a wall which face tooth bottom corners of bases of mating walls.

[Citation List]

[Patent Literature]

[PTL 1] Japanese Unexamined Patent Application, Publication No. 2015-55173
[PTL 2] European Patent Application Publication No. EP 3428451 A1

[Summary of Invention]

[Technical Problem]

However, the stepped scroll compressor has a problem that fluid leakage at the step sections is large. Further, there is a problem that stress is concentrated on root portions of the step sections, and strength is reduced.

To cope with the above, the inventors are considering providing continuous inclined sections in place of the step sections provided on the walls and the end plates.

However, there is a problem that machining for an inclined section has a higher degree of difficulty than machining for a flat surface. When machining accuracy of a tooth bottom corner at a base of a wall is reduced, there is a risk that a step section may be formed on the tooth bottom corner, and come into contact with a tip seal. When the tip seal spreads over and comes into contact with the step section, a clearance is generated between the tip seal and the tooth bottom, so that leakage of fluid occurs. Further, abrasion may excessively proceed due to sliding of the tip seal against the step section. This may cause performance deterioration of the scroll fluid machine.

Not only in a scroll fluid machine having inclined sections, but also in a general scroll compressor with no step section or a stepped scroll compressor, such a problem may be caused by a machining error of the tooth bottom corner.

The present invention has been made in view of such a circumstance, and an object of the present invention is to provide a scroll fluid machine and a machining method for a scroll member, in which contact between a step section formed on a tooth bottom corner and a tip seal is prevented.

[Solution to Problem]

In order to solve the aforementioned problems, a scroll fluid machine according to a non-claimed example and a machining method for a scroll member of the present invention employs the following solutions.

A scroll fluid machine according to a non-claimed example is a scroll fluid machine including: a first scroll member provided with a spiral first wall on a first end plate; a second scroll member that is provided with a spiral second wall on a second end plate disposed so as to face the first end plate, and that relatively revolves by engagement between the second wall and the first wall; and a tip seal that is provided in a groove section formed in a tooth tip of each of the first wall and the second wall, and that comes into contact with a facing tooth bottom to seal fluid, wherein a step section is provided on a tooth bottom corner at a base of one of the walls facing a tooth tip corner of another wall, and the groove section is formed on a center side in a thickness direction of the wall with respect to a position facing the step section.

When a tooth bottom is machined, a step section is sometimes formed on a tooth bottom corner at a base of a wall. When the tip seal spreads over and comes into contact with the step section, a clearance may be generated between the tip seal and the tooth bottom, leakage of fluid may occur, and abrasion of the tip seal may be caused.

To cope with the above, the groove section is formed on the center side in the thickness direction of the wall with respect to the position facing the step section, so that the tip seal does not come into contact with the step section. Consequently, it is possible to reduce fluid leakage from the clearance between the tip seal and the step section, and suppress the abrasion of the tip seal, and it is possible to suppress reduction of the performance of the scroll fluid machine.

The step section provided on the tooth bottom corner includes a step section inevitably formed by machining.

The scroll fluid machine according to examples disclosed herein may include an inclined section that continuously reduces an inter-facing-surface distance between the first end plate and the second end plate facing each other, from an outer circumferential side toward an inner circumferential side of each of the first wall and the second wall, wherein each of the inclined sections is provided over a range of 180° or more around a spiral center.

The inclined section that continuously reduces the inter-facing-surface distance between the first end plate and the second end plate from the outer circumferential side toward the inner circumferential side of each wall is provided, and therefore fluid sucked from the outer circumferential side is not only compressed by reduction of compression chambers in accordance with the spiral shape of the wall, but also further compressed by reduction of the inter-facing-surface distance between the end plates, toward the inner circumferential side.

The machining for the inclined section has a higher degree of difficulty than machining for a flat surface, and therefore machining accuracy of the tooth bottom corner at the base of the wall may be reduced. When the machining accuracy of the tooth bottom corner is reduced, a step section is generated on the tooth bottom corner.

For example, when one of circumferential wall surfaces of the wall and an adjacent tooth bottom are machined, and thereafter another circumferential wall surface facing the one circumferential wall surface with a common tooth bottom therebetween, and an adjacent tooth bottom are machined, the machining is performed through the machining steps of at least two passes. In this case, it is difficult that the heights of the tooth bottoms exactly coincide in the two passes, and therefore deviation in height between the tooth bottoms is caused, and the step section is generated on the tooth bottom adjacent to each tooth bottom corner.

In a case where one of circumferential wall surfaces of the wall and an adjacent tooth bottom are machined at a predetermined first machining pitch, another circumferential wall surface of the wall and an adjacent tooth bottom are machined at the same first machining pitch, and thereafter only a tooth bottom is machined at a second machining pitch finer than the first machining pitch, step sections corresponding to the first machining pitch rougher than the second machining pitch are generated on the tooth bottoms adjacent to the tooth bottom corners.

Thus, in the scroll member having the inclined section, the step sections are easily generated on the tooth bottom corners, and therefore it is particularly effective that as described above, the groove section is located so as not to face the step sections, so that the tip seal does not come into contact with the step sections.

A machining method for a scroll member according to a non-claimed example is a machining method for a scroll member, the scroll member including: an end plate; and a spiral wall provided on the end plate, the scroll member being provided with a groove section storing a tip seal on a tooth tip of the wall, the machining method for a scroll member including: a first circumferential wall surface machining step of machining one of circumferential wall surfaces of the wall and an adjacent tooth bottom; a second circumferential wall surface machining step of machining another circumferential wall surface of the wall, and an adjacent tooth bottom; and a groove section machining step of forming the groove section on a tooth tip of the wall, wherein a step section is provided on a tooth bottom corner at a base of the wall, and the groove section is formed on a center side in a thickness direction of the wall with respect to a position facing the step section.

The first circumferential wall surface machining step and the second circumferential wall surface machining step are performed, and thereafter the step section is formed on the tooth bottom corner due to machining accuracy or the like. The groove section is formed at such a position not to face this step section. Consequently, it is possible to avoid contact between the tip seal and the step section.

The step section provided on the tooth bottom corner includes a step section inevitably formed by machining.

Further, the scroll member includes a wall inclined section that has a height of the wall continuously reducing from an outer circumferential side toward an inner circumferential side, and/or an end plate inclined section that has a height of the end plate continuously increasing from the outer circumferential side toward the inner circumferential side, and the wall inclined section and the end plate inclined section are each provided over a range of 180° or more around a spiral center.

A machining method for a scroll member according to an aspect of the present invention is provided according to claim 1.

The machining for the inclined section has a higher degree of difficulty than machining for a flat surface. Therefore, the step of machining each of the circumferential wall surfaces, and the step of machining only the tooth bottom are divided, and the circumferential wall surfaces and the tooth bottom are machined by three passes. Consequently, it is possible to accurately machine the tooth bottom that becomes the inclined section.

In the scroll member having the inclined section and having high degree of difficulty of machining, the step sections are easily generated on the tooth bottom corners, and therefore it is particularly effective that the groove section is located so as not to face the step sections as described above, so that the tip seal does not come into contact with the step sections.

The machining pitch of the tooth bottom machining step is made finer than the machining pitch of each of the circumferential wall surface machining steps, and the inclined sections of the tooth bottoms are preferably accurately machined.

The tooth tip of the inclined section is preferably machined as a machining pitch equivalent to the tooth bottom machining step.

The step sections provided on the tooth bottom corners include step sections inevitably formed by machining.

[Advantageous Effects of Invention]

The groove section is formed on the center side in the thickness direction of the wall with respect to the position facing the step section, and therefore it is possible to prevent contact between the tip seal and the step section. Consequently, it is possible to reduce fluid leakage from a clearance between the tip seal and the step section, and suppress the abrasion of the tip seal, and it is possible to suppress reduction of the performance of the scroll fluid machine.

[Brief Description of Drawings]

[Fig. 1A] Fig. 1A is a longitudinal sectional view illustrating a fixed scroll and an orbiting scroll of a scroll compressor according to one embodiment of the present invention.

[Fig. 1B] Fig. 1B is a plan view of the fixed scroll of Fig. 1A viewed from a wall side.

[Fig. 2] Fig. 2 is a perspective view illustrating the orbiting scroll of Fig. 1.

[Fig. 3] Fig. 3 is a plan view illustrating end plate flat sections provided in the fixed scroll.

[Fig. 4] Fig. 4 is a plan view illustrating a wall flat section provided in the fixed scroll.

[Fig. 5] Fig. 5 is a schematic diagram illustrating a wall represented so as to extend in the spiral direction.

[Fig. 6] Fig. 6 is a partially enlarged view illustrating an enlarged region of reference symbol Z in Fig. 1B.

[Fig. 7A] Fig. 7A is a side view illustrating a tip seal clearance of a portion illustrated in Fig. 6, and illustrating a state in which the tip seal clearance is relatively small.

[Fig. 7B] Fig. 7B is a side view illustrating the tip seal clearance of the portion illustrated in Fig. 6, and illustrating a state in which the tip seal clearance is relatively large.

[Fig. 8] Fig. 8 is a longitudinal sectional view illustrating a cross-section of the vicinity of a tooth tip cut in the radial direction in an inclined section.

[Fig. 9] Fig. 9 is a longitudinal sectional view illustrating a modification of Fig. 8.

[Fig. 10A] Fig. 10A is a longitudinal sectional view illustrating a modified example, and illustrating combination of scrolls having no step section.

[Fig. 10B] Fig. 10B is a longitudinal sectional view illustrating a modified example, and illustrating combination of stepped scrolls.

[Description of Embodiments]

Hereinafter, one embodiment according to the present invention will be described with reference to the drawings.

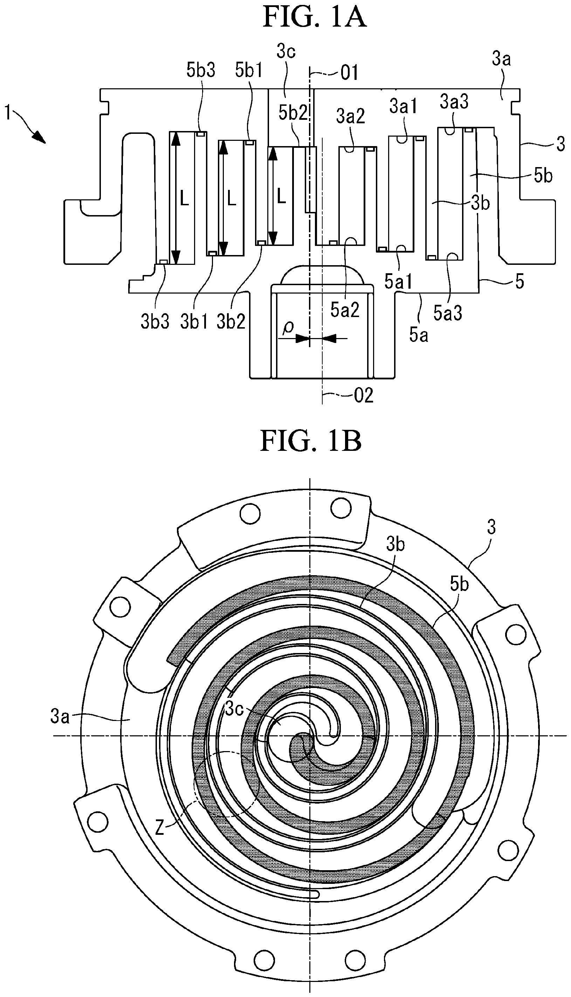

Fig. 1 illustrates a fixed scroll (first scroll member) 3 and an orbiting scroll (second scroll member) 5 of a scroll compressor (scroll fluid machine) 1. The scroll compressor 1 is used as a compressor that compresses a gas refrigerant (fluid) for performing refrigerating cycle of an air conditioner or the like, for example.

The fixed scroll 3 and the orbiting scroll 5 are a compression mechanism made of metal such as aluminum alloy and iron, and are housed in a housing (not illustrated). The fixed scroll 3 and the orbiting scroll 5 suck, from the outer circumferential side, fluid guided into the housing, and discharge the compressed fluid from a discharge port 3c at the center of the fixed scroll 3 to the outside.

The fixed scroll 3 is fixed to the housing, and includes a substantially disk-shaped end plate (first end plate) 3a, and a spiral wall (first wall) 3b erected on a side surface of the end plate 3a, as illustrated in Fig. 1A. The orbiting scroll 5 includes a substantially disk-shaped end plate (second end plate) 5a, and a spiral wall (second wall) 5b erected on a side surface of the end plate 5a. The respective spiral shapes of the walls 3b, 5b are each defined by using, for example, an involute curve or an Archimedes curve.

The center of the fixed scroll 3 and the center of the orbiting scroll 5 are separated by an orbiting radius $\rho$, are engaged such that the phases of the walls 3b, 5b are shifted by 180°, and are assembled so as to have slight clearances (tip clearances) in the height direction between tooth tips and tooth bottoms of the walls 3b, 5b of both the scrolls at normal temperature. Consequently, a plurality of pairs of compression chambers formed so as to be surrounded by the end plates 3a, 5a and the walls 3b, 5b are formed between the scrolls 3, 5 so as to be symmetrical with respect to the scroll centers. The orbiting scroll 5 revolves around the fixed scroll 3 by a rotation prevention mechanism such as an Oldham ring (not illustrated).

As illustrated in Fig. 1A, inclined sections that continuously reduce an inter-facing-surface distance L between the facing end plates 3a, 5a from the outer circumferential sides toward the inner circumferential sides of the spiral walls 3b, 5b are provided.

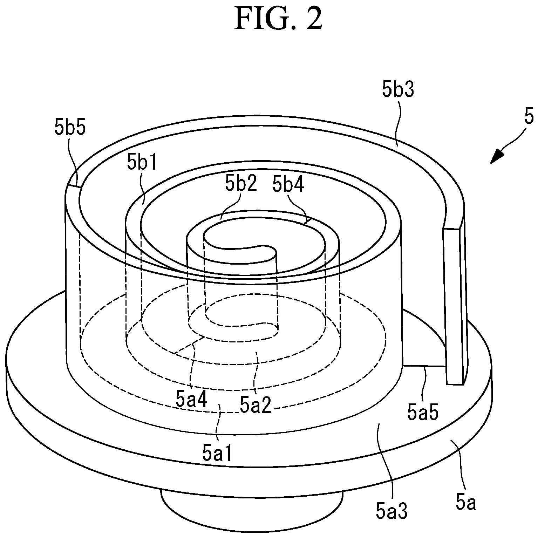

As illustrated in Fig. 2, a wall inclined section 5b1 having a height that continuously reduces from the outer circumferential side toward inner circumferential side is provided in the wall 5b of the orbiting scroll 5. An end plate inclined section 3a1 (see Fig. 1A) that inclines in accordance with inclination of the wall inclined section 5b1 is provided in a tooth bottom surface of the fixed scroll 3 facing a tooth tip of this wall inclined section 5b1. The continuous inclined section is formed by these wall inclined section 5b1 and end plate inclined section 3a1. Similarly, a wall inclined section 3b1 having a height that continuously inclines from the outer circumferential side toward inner circumferential side is provided in the wall 3b of the fixed scroll 3, and an end plate inclined section 5a1 facing a tooth tip of this wall inclined section 3b1 is provided in the end plate 5a of the orbiting scroll 5.

The meaning of "continuously" in the inclined section mentioned in this embodiment is not limited to smoothly connected inclination, but includes inclination that is formed by stepwisely connecting small step sections inevitably generated in machining, and that is an inclined section continuously inclined as a whole. However, the above meaning does not include a large step section such as a so-called stepped scroll.

The wall inclined sections 3b1, 5b1 and/or the end plate inclined sections 3a1, 5a1 are coated. Examples of the coating include manganese phosphate treatment, and nickel-phosphorus plating.

As illustrated in Fig. 2, wall flat sections 5b2, 5b3 each having a constant height are provided on the innermost circumferential side and the outermost circumferential side of the wall 5b of the orbiting scroll 5, respectively. These wall flat sections 5b2, 5b3 are each provided over a region of 180° around the center 02 (see Fig. 1A) of the orbiting scroll 5. Wall inclined connecting sections 5b4, 5b5 serving as bent sections are provided at respective positions where the wall flat sections 5b2, 5b3 and the wall inclined section 5b1 are connected.

Similarly, end plate flat sections 5a2, 5a3 each having a constant height are provided on a tooth bottom of the end plate 5a of the orbiting scroll 5. These end plate flat sections 5a2, 5a3 are also each provided over a region of 180° around the center of the orbiting scroll 5. End plate inclined connecting sections 5a4, 5a5 serving as bent sections are provided at respective positions where the end plate flat sections 5a2, 5a3 and the end plate inclined section 5a1 are connected.

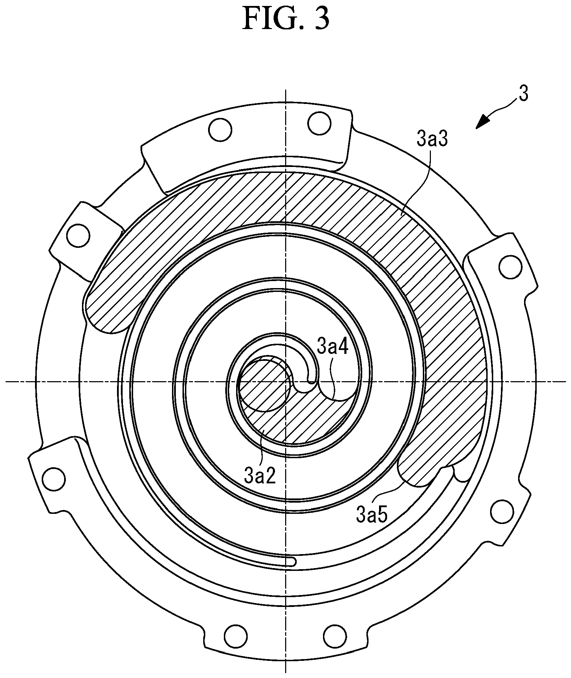

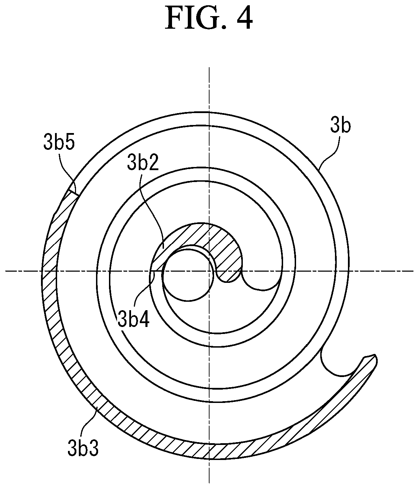

As illustrated by hatching in Fig. 3 and Fig. 4, end plate flat sections 3a2, 3a3, wall flat sections 3b2, 3b3, end plate inclined connecting sections 3a4, 3a5, and wall inclined connecting sections 3b4, 3b5 are provided in the fixed scroll 3, like the orbiting scroll 5.

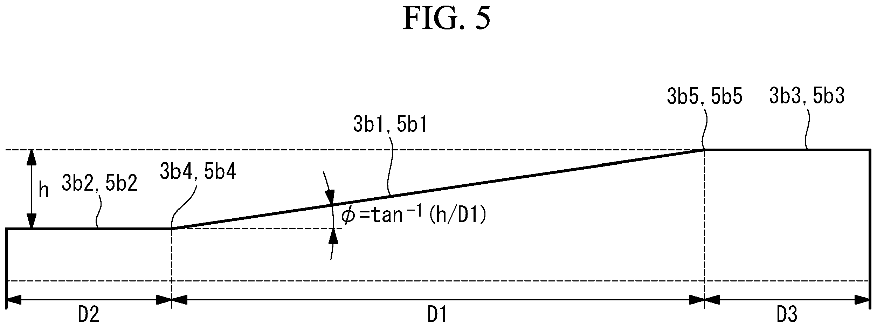

Fig. 5 illustrates the walls 3b, 5b represented so as to extend in the spiral direction. As illustrated in Fig. 5, the wall flat sections 3b2, 5b2 on the innermost circumferential sides are each provided so as to extend over a distance D2, and the wall flat sections 3b3, 5b3 on the outermost circumferential sides are each provided so as to extend over a distance D3. The distance D2 and the distance D3 are equivalent to the lengths of the regions of 180° (180° or more and 360° or less, preferably 210° or less) around the centers O1, O2 of the scrolls 3, 5. The wall inclined sections 3b1, 5b1 are provided between the wall flat sections 3b2, 5b2 on the innermost circumferential sides and the wall flat sections 3b3, 5b3 on the outermost circumferential sides so as to extend over a distance D1. Where each of height differences between the wall flat sections 3b2, 5b2 on the innermost circumferential sides and the wall flat sections 3b3, 5b3 on the outermost circumferential sides is denoted by h, the inclination $\varphi$ of each of the wall inclined sections 3b1, 5b1 is expressed by the following expression.

$$\varphi = \tan^{-1} (h/D1) \quad \ldots (1)$$

Thus, the inclination $\varphi$ in the inclined section is constant with respect to the circumferential direction in which each of the spiral walls 3b, 5b extends. The distance D1 is longer than the distance D2, and is longer than the distance D3.

For example, in this embodiment, the specifications of the scrolls 3, 5 are as follows.

(1) Orbiting radius $\rho$ [mm]: 2 or more and 15 or less, preferably 3 or more and 10 or less
(2) The number of turns of each of the walls 3b, 5b: 1.5 or more and 4.5 or less, preferably 2.0 or more and 3.5 or less
(3) Height difference h [mm]: 2 or more and 20 or less, preferably 5 or more and 15 or less
(4) h/Lout (wall height on outermost circumferential side):
0.05 or more and 0.35 or less, preferably 0.1 or more and 0.25 or less
(5) Angular range of inclined section (angular range equivalent to distance D1) [°]: 180 or more and 1080 or less, preferably 360 or more and 720 or less
(6) Angle $\Phi$ [°] of inclined section: 0.2 or more and 4 or less, preferably 0.5 or more and 2.5 or less

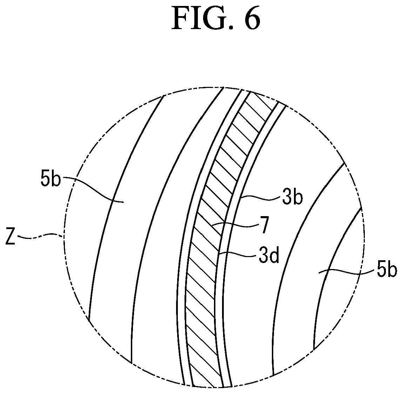

In Fig. 6, an enlarged view of a region indicated by reference symbol Z in Fig. 1B is illustrated. As illustrated in Fig. 6, a tip seal 7 is provided on the tooth tip of the wall 3b of the fixed scroll 3. The tip seal 7 is made of resin, and comes into contact with the tooth bottom of the end plate 5a of the facing orbiting scroll 5 to seal fluid. The tip seal 7 is housed in a tip seal groove 3d formed in the circumferential direction of the tooth tip of the wall 3b. Compressed fluid enters this tip seal groove 3d, and the tip seal 7 is pressed from a back surface, and pressed out to the tooth bottom side to be brought into contact with the facing tooth bottom. Similarly, a tip seal is provided on the tooth tip of the wall 5b of the orbiting scroll 5.

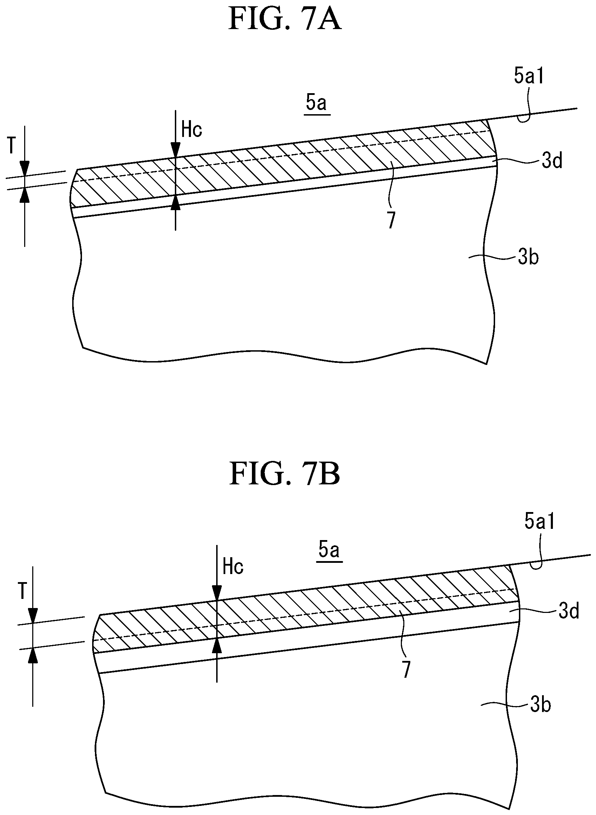

As illustrated in Fig. 7, the height Hc of the tip seal 7 in the height direction of the wall 3b is constant in the circumferential direction.

When both the scrolls 3, 5 relatively revolve, the respective positions of the tooth tip and the tooth bottom relatively shift by an orbiting diameter (orbiting radius $\rho \times$ 2). In the inclined section, a tip clearance between the tooth tip and the tooth bottom changes due to this position shift between the tooth tip and the tooth bottom. A tip clearance change amount $\Delta h$ [mm] is, for example, 0.05 or more and 1.0 or less, preferably 0.1 or more and 0.6 or less. For example, the tip clearance T is small in Fig. 7A, and the tip clearance T is large in Fig. 7B. Even when this tip clearance T changes due to the orbiting movement, the tip seal 7 is pressed to the tooth bottom side of the end plate 5a from the back surface by compressed fluid, and therefore can seal following this pressing.

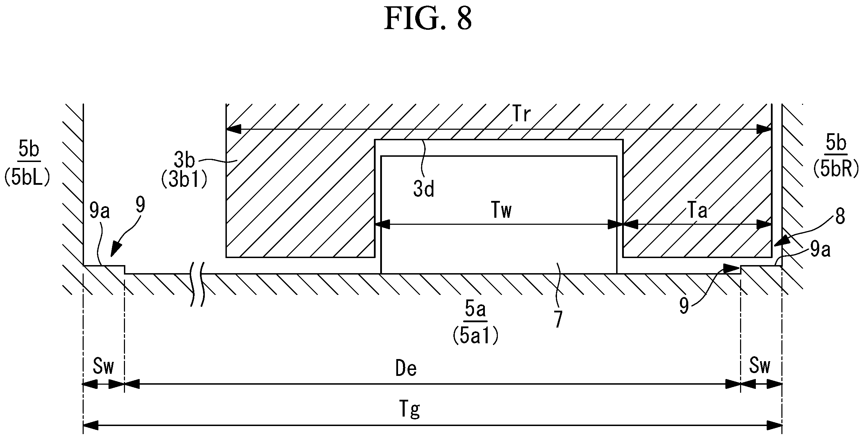

Fig. 8 illustrates a cross-section of the vicinity of a tooth tip cut in the radial direction at a predetermined position of the wall inclined section 3b1 of the fixed scroll 3. A cross-section of the vicinity of a tooth tip cut in the radial direction in the wall inclined section 5b1 of the orbiting scroll 5 has a similar shape. Therefore, in the following description, only relation between the tooth tip of the wall inclined section 3b1 of the fixed scroll 3, and a tooth bottom of the end plate inclined section 5a1 of the orbiting scroll 5 facing the fixed scroll 3 will be described.

As illustrated in Fig. 8, the tooth tip of the wall 3b and the tooth bottom of the end plate 5a are located so as to face each other. The tip seal 7 stored in the tip seal groove 3d is disposed in the tooth tip of the wall 3b. The groove width Tw of the tip seal groove 3d is formed slightly larger than the width of the tip seal 7. Reference symbol Tr denotes the width of the wall 3b. Reference symbol Ta denotes a bank width equivalent to a dimension of the tooth tip from a circumferential wall part of the wall 3b to the tip seal groove 3d. That is, a region of the bank width Ta is a region where the tip seal groove 3d is not formed in the tooth tip.

The tip seal 7 is pressed on the tooth bottom side (lower side in Fig. 8) by pressure of fluid entering on the back surface of the tip seal 7. The wall 3b is located in the vicinity of a first wall 5bR (right in Fig. 8), and forms a seal at this position so as to close a compression chamber. The wall 3b is separated from a second wall 5bL (left in Fig. 8), and the compression chamber is formed between the wall 3b and the second wall 5bL.

Step sections 9a that protrude from a central tooth bottom are formed on tooth bottom corners 9 at bases of the wall 5b. The step sections 9a each have a step section width Sw, and are each located so as to face a tooth tip corner 8 of the wall 3b.

The tip seal groove 3d is formed so as to be shifted on the center side in the thickness direction of the wall 3b with respect to positions facing the step sections 9a. That is, the bank width Ta of the tooth tip of the wall 3b is a dimension larger than the step section width Sw of the step section 9a of each tooth bottom corner 9. Consequently, the tip seal 7 is installed at such a position not to come into contact with the step sections 9a.

The step sections 9a located at the tooth bottom corners 9 are inevitably formed by machining for the end plate inclined section 5a1. This is because machining for forming an inclined surface on the tooth bottom of the end plate 5a has a higher degree of difficulty than machining for a flat surface. The end plate inclined section 5a1 is machined by a machining step including the following three passes.

First, as machining in a first pass, a circumferential wall surface of the first wall 5bR and an adjacent tooth bottom are machined by an end mill (first circumferential wall surface machining step). A machining pitch in this step is given as an instruction program of an NC (Numerical Control) machine tool, as a first machining pitch p1. The diameter of the end mill at this time is De, and is a slightly smaller dimension than a tooth bottom width Tg.

Next, as machining in a second pass, a circumferential wall surface of the second wall 5bL and an adjacent tooth bottom are machined by the end mill (second circumferential wall surface machining step). A machining pitch in this step is the first machining pitch p1 that is the same as the machining pitch in the first pass. As the diameter of the end mill, the diameter De which is the same as the diameter in the first pass is used.

Finally, as machining in a third pass, only the central tooth bottom between the circumferential wall surface of the first wall 5bR and the circumferential wall surface of the second wall 5bL is machined (tooth bottom machining step). As a machining pitch in this step, a second machining pitch p2 finer than the first machining pitch p1 in each of the first pass and the second pass is used. Consequently, the inclination of the tooth bottom surface is formed as smoothly as possible. The diameter of an end mill is a dimension smaller than the tooth bottom width Tg, and for example, the diameter De which is the same as the diameter in each of the first pass and the second pass is used.

As described above, the end plate inclined section 5a1 and the circumferential wall surfaces of the wall 5b adjacent thereto are machined through the machining step including three passes. At this time, the second machining pitch p2 used in the third pass for machining the tooth bottom is finer than the first machining pitch p1 in each of the first pass and the second pass, and therefore the step sections 9a remain on the tooth bottom corners 9 on both sides where the machining in the third pass is not performed.

Assuming that the machining in the third pass is performed along the center of the tooth bottom width, the step section width Sw of each step section 9a is (Tg - De)/2.

The step section 9a can be generated by difference (machining error) between the edge height (vertical direction in Fig. 8) of the end mill in the machining in each of the first pass and the second pass, and the edge height of the end mill in the machining in the third pass.

The machining for the wall inclined section 3b1 that is the tooth tip of the wall 3b is performed by use of the second machining pitch p2 which is the same as the machining pitch in the aforementioned third pass machining. Thereafter, machining for forming the tip seal groove 3d is performed.

The aforementioned scroll compressor 1 is operated as follows.

The orbiting scroll 5 revolves around the fixed scroll 3 by a driving source such as an electric motor (not illustrated). Consequently, fluid is sucked from the outer circumferential sides of the scrolls 3, 5, and is taken in the compression chambers surrounded by the walls 3b, 5b and the end plates 3a, 5a. The fluid in the compression chambers is sequentially compressed in accordance with movement from the outer circumferential side to the inner circumferential side, and the compressed fluid is finally discharged from the discharge port 3c formed in the fixed scroll 3. When the fluid is compressed, the fluid is compressed also in the height direction of the walls 3b, 5b in the inclined sections formed by the end plate inclined sections 3a1, 5a1 and the wall inclined sections 3b1, 5b1, and is three-dimensionally compressed.

According to this embodiment, the following working effects are exhibited.

When the tooth bottom is machined, the step sections 9a are formed on the tooth bottom corners 9 at the base of the wall 5b. When the tip seal 7 comes into contact with this step section 9a so as to spread over the step section 9a, a clearance is generated between the tip seal 7 and the tooth bottom and fluid leakage may occur, and abrasion of the tip seal 7 may be caused.

In this embodiment, the tip seal groove 3d is formed on the center side in the thickness direction of the wall 3b with respect to the positions facing the step sections 9a, so that the tip seal 7 does not come into contact with the step sections 9a. That is, the bank width Ta is made larger than the step section width Sw (Ta > Sw). Consequently, it is possible to reduce leakage and suppress the abrasion of the tip seal 7, and it is possible to suppress reduction of the performance of the scroll compressor 1.

Like this embodiment, in the scrolls 3, 5 having the end plate inclined sections 3a1, 5a1, the step sections 9a are easily generated on the tooth bottom corners 9 due to the difficulty of the machining, and therefore it is particularly effective that the tip seal groove 3d is located so as not to face the step sections 9a, so that the tip seal 7 does not come into contact with the step sections 9a.

The step of machining the circumferential wall surface of each of the walls 5bR, 5bL, and the step of machining only the tooth bottom are divided, and the circumferential wall surfaces and the tooth bottom are machined by three passes. Consequently, it is possible to accurately machine the tooth bottom that becomes the inclined section.

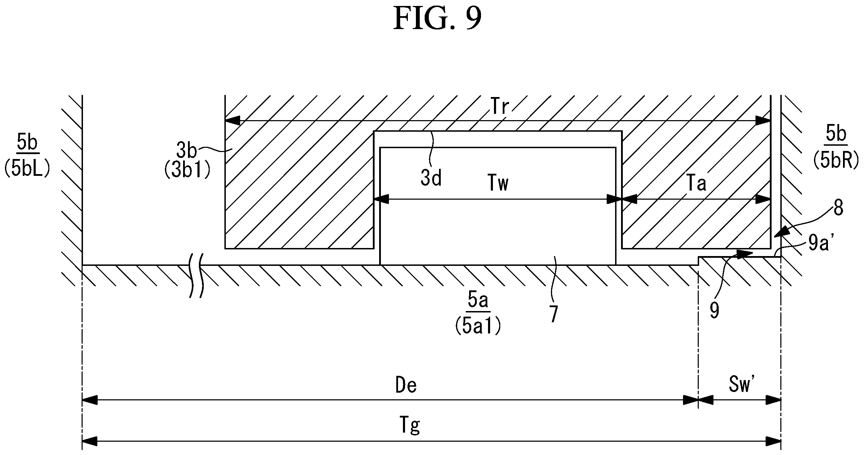

In this embodiment, a configuration for avoiding contact with the step sections 9a generated in a case where the tooth bottom is machined by the three passes is described. However, the present invention can be also applied to a step section 9a' generated in a case where a tooth bottom is machined by two passes, as illustrated in Fig. 9.

The tooth bottom of an end plate 5a illustrated in Fig. 9 is machined by two passes as described below.

First, as machining in a first pass, a circumferential wall surface of a first wall 5bR and an adjacent tooth bottom are machined by an end mill.

Next, as machining in a second pass, a circumferential wall surface of a second wall 5bL and an adjacent tooth bottom are machined by an end mill. The tooth bottom formed at this time is a final shape. In the second pass, as a machining pitch, a second machining pitch p2 smaller than a first machining pitch p1 in the first pass may be used, or the first machining pitch p1 may be used.

When machining by such two passes is performed, the step section 9a' is inevitably generated by the difference in machining pitch as described above, or the difference between the edge heights of the end mills in the first pass machining and the second pass machining (machining error). In this case, a step section width Sw' is (Tg - De).

A tip seal groove 3d is formed on the center side in the thickness direction of a wall 3b with respect to a position facing the step sections 9a' so as to avoid contact with the step sections 9a'. Consequently, it is possible to avoid contact of the step sections 9a' generated by the machining by the two passes with the tip seal 7 to suppress the performance deterioration of the scroll compressor 1.

The end plate inclined sections 3a1, 5a1 and the wall inclined sections 3b1, 5b1 are provided in both the scrolls 3, 5 in this embodiment, but may be provided in either one.

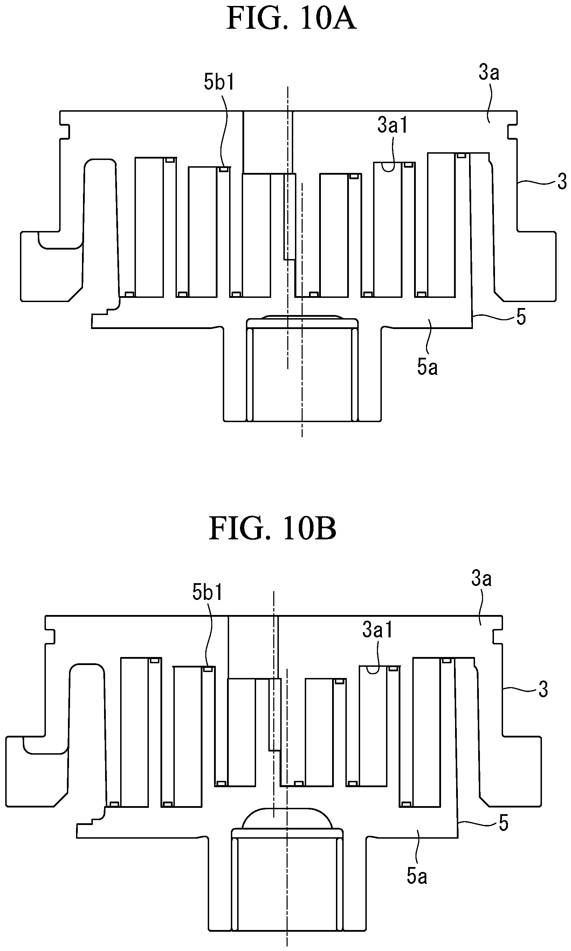

Specifically, as illustrated in Fig. 10A, in a case where a wall inclined section 5b1 is provided in a first wall (for example, an orbiting scroll 5), and an end plate inclined section 3a1 is provided in a second end plate 3a, a second wall and a first end plate 5a may be flat.

As illustrated in Fig. 10B, a shape formed by combination with a conventional stepped shape, that is, a shape, in which while an end plate inclined section 3a1 is provided in an end plate 3a of a fixed scroll 3, a step section is provided in an end plate 5a of an orbiting scroll 5, may be combined.

In this embodiment, the end plate flat sections 3b2, 3b3, 5b2, 5b3, and the end plate flat sections 3a2, 3a3, 5a2, 5a3 are provided. However, the flat sections on the inner circumferential sides and/or the outer circumferential sides may be omitted, and the inclined sections may be provided so as to extend over the entire walls 3b, 5b.

In this embodiment, the scroll compressor 1 having the inclined sections is employed. However, even in a general scroll compressor with no step section or a stepped scroll compressor, the step sections 9a, 9a' can be each generated by the machining error of the tooth bottom corner. Therefore, the present invention can be also applied to the general scroll compressor with no step section or the stepped scroll compressor.

The present invention is applied to a scroll compressor in this embodiment, but can be also applied to a scroll expander used as an expander.

[Reference Signs List]

1 scroll compressor (scroll fluid machine)
3 fixed scroll (first scroll member)
3a end plate (first end plate)
3a1 end plate inclined section
3a2 end plate flat section (inner circumferential side)
3a3 end plate flat section (outer circumferential side)
3a4 end plate inclined connecting section (inner circumferential side)
3a5 end plate inclined connecting section (outer circumferential side)
3b wall (first wall)
3b1 wall inclined section
3b2 wall flat section (inner circumferential side)
3b3 wall flat section (outer circumferential side)
3b4 wall inclined connecting section (inner circumferential side)
3b5 wall inclined connecting section (outer circumferential side)
3c discharge port
3d tip seal groove
5 orbiting scroll (second scroll member)
5a end plate (second end plate)
5a1 end plate inclined section
5a2 end plate flat section (inner circumferential side)
5a3 end plate flat section (outer circumferential side)
5a4 end plate inclined connecting section (inner circumferential side)
5a5 end plate inclined connecting section (outer circumferential side)
5b wall (second wall)
5b1 wall inclined section
5b2 wall flat section (inner circumferential side)
5b3 wall flat section (outer circumferential side)
5b4 wall inclined connecting section (inner circumferential side)
5b5 wall inclined connecting section (outer circumferential side)
7 tip seal
8 tooth tip corner
9 tooth bottom corner
9a step section
De end mill diameter
L inter-facing-surface distance
Sw step section width
T tip clearance
Ta bank width
Tr wall width
Tw groove width
Tg tooth bottom width
Φ inclination

**Claims**

1. A machining method for a scroll member (3, 5) of a scroll fluid machine, the scroll member including:

   an end plate (3a, 5a); and
   a spiral wall (3b, 5b) provided on the end plate, the scroll member being provided with an inclined section (3a1, 5a1, 3b1, 5b1) having a height from a tooth bottom to a tooth tip of the wall, the height being continuously changed in a spiral direction, the machining method for a scroll member comprising:

   a first circumferential wall surface machining step of machining one of circumferential wall surfaces of the wall in the inclined section and an adjacent tooth bottom;
   a second circumferential wall surface machining step of machining another circumferential wall surface of the wall in the inclined section and an adjacent tooth bottom;
   a tooth bottom machining step of machining only a tooth bottom between the one circumferential wall surface and the other circumferential wall surface; and
   a groove section machining step of forming a groove section (3d) on a tooth tip of the wall, wherein
   a step section (9a, 9a') is provided on a tooth bottom corner (9) at a base of the wall,
   the groove section is formed on a center side in a thickness direction of the wall with respect to a position facing the step section,
   a machining pitch in the tooth bottom machining step is finer than a machining pitch in the first circumferential wall surface machining step and the second circumferential wall surface machining step, and
   **characterized in that** an angle of the inclined section is 0.2° or more and 4° or less.

**Patentansprüche**

1.  Maschinelles Bearbeitungsverfahren für ein Spiralelement (3, 5) einer Spiralfluidmaschine, wobei das Spiralelement Folgendes beinhaltet:

    eine Endplatte (3a, 5a) und
    eine Spiralwand (3b, 5b), die an der Endplatte bereitgestellt ist, wobei das Spiralelement mit einem schrägen Abschnitt (3a1, 5a1, 3b1, 5b1) versehen ist, der eine Höhe von einem Zahnboden zu einer Zahnspitze der Wand aufweist, wobei sich die Höhe in einer Spiralrichtung kontinuierlich ändert, wobei das maschinelle Bearbeitungsverfahren für ein Spiralelement Folgendes umfasst:

    einen ersten Schritt des maschinellen Bearbeitens einer umlaufenden Wandfläche, um eine von umlaufenden Wandflächen der Wand in dem schrägen Abschnitt und einen benachbarten Zahnboden maschinell zu bearbeiten,
    einen zweiten Schritt des maschinellen Bearbeitens einer umlaufenden Wandfläche, um eine andere umlaufende Wandfläche der Wand in dem schrägen Abschnitt und einen benachbarten Zahnboden maschinell zu bearbeiten,
    einen Schritt zum maschinellen Bearbeiten eines Zahnbodens, um lediglich einen Zahnboden zwischen der einen umlaufenden Wandfläche und der anderen umlaufenden Wandfläche maschinell zu bearbeiten, und
    einen Schritt zum maschinellen Bearbeiten eines Rillenabschnitts, um auf einer Zahnspitze der Wand einen Rillenabschnitt (3d) zu bilden, wobei
    ein Absatzabschnitt (9a, 9a') an einer Zahnbodenecke (9) an einer Basis der Wand bereitgestellt wird,
    wobei der Rillenabschnitt in Bezug auf eine Position, die zu dem Absatzabschnitt weist, auf einer Mittenseite in einer Dickerichtung der Wand gebildet wird,
    wobei eine Steigung des maschinellen Bearbeitens in dem Schritt des maschinellen Bearbeitens des Zahnbodens feiner als eine Steigung des maschinellen Bearbeitens in dem ersten Schritt des maschinellen Bearbeitens einer umlaufenden Wandfläche und dem zweiten Schritt des maschinellen Bearbeitens einer umlaufenden Wandfläche ist, und
    **dadurch gekennzeichnet, dass** ein Winkel des schrägen Abschnitts 0,2° oder mehr und 4° oder weniger beträgt.

**Revendications**

1.  Procédé d'usinage pour un élément à spirale (3, 5) d'une machine à fluide à spirale, l'élément à spirale comprenant :

    une plaque d'extrémité (3a, 5a) ; et
    une paroi en spirale (3b, 5b) prévue sur la plaque d'extrémité, l'élément à spirale étant prévu avec une section inclinée (3a1, 5a1, 3b1, 5b1) ayant une hauteur allant d'un fond de dent à une pointe de dent de la paroi, la hauteur étant modifiée, de manière continue, dans une direction de spirale, le procédé d'usinage pour un élément à spirale comprenant :

    une première étape d'usinage de surface de paroi circonférentielle pour usiner l'une des surfaces de paroi circonférentielle de la paroi dans la section inclinée et un fond de dent adjacent ;
    une deuxième étape d'usinage de surface de paroi circonférentielle pour usiner une autre surface de paroi circonférentielle de la paroi dans la section inclinée et un fond de dent adjacent ;
    une étape d'usinage de fond de dent pour usiner uniquement un fond de dent entre la surface de paroi circonférentielle et l'autre surface de paroi circonférentielle ; et
    une étape d'usinage de section de rainure pour former une section de rainure (3d) sur une pointe de dent de la paroi, dans lequel :

    une section de marche (9a, 9a') est prévue sur un coin de fond de dent (9) au niveau d'une base de la paroi, la section de rainure est formée sur un côté central dans une direction d'épaisseur de la paroi par rapport à une position faisant face à la section de marche, un pas d'usinage à l'étape d'usinage de fond de dent est plus fin qu'un pas d'usinage à la première étape d'usinage de surface de paroi circonférentielle et à la deuxième étape d'usinage de surface de paroi circonférentielle, et **caractérisé en ce qu'**un angle de la section inclinée est de 0,2° ou plus et de 4° ou moins.

# FIG. 1A

# FIG. 1B

# FIG. 2

# FIG. 3

# FIG. 4

FIG. 5

$$\phi = \tan^{-1}(h/D1)$$

EP 3 754 197 B1

FIG. 6

# FIG. 7A

# FIG. 7B

## FIG. 8

# FIG. 9

# FIG. 10A

# FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015055173 A

- EP 3428451 A1